# EUROPÄISCHE PATENTSCHRIFT

(11) **EP 4 468 199 B1**
(45) Veröffentlichungstag und Bekanntmachung des Hinweises auf die Patenterteilung: **25.02.2026**
(21) Anmeldenummer: 24174714.6
(22) Anmeldetag: 08.05.2024
(51) Int. Cl.: G06K 19/02, B29C 51/14, B29C 51/16, B41M 5/00, G06K 19/10, G09F 3/00, B42D 25/30, B42D 25/41

(54) **VERFAHREN ZUR ERZEUGUNG EINES OPTISCH MASCHINENLESBAREN IDENTIFIKATORS AUF EINER VERPACKUNGSFOLIE**
METHOD FOR GENERATING AN OPTICAL MACHINE-READABLE IDENTIFIER ON A PACKAGING FILM
PROCÉDÉ DE GÉNÉRATION D'UN IDENTIFIANT LISIBLE PAR MACHINE OPTIQUE SUR UN FILM D'EMBALLAGE

(30) Priorität: 26.05.2023 AT 504192023
(43) Veröffentlichungstag der Anmeldung: 27.11.2024
(73) Patentinhaber: Adapa Digital GesmbH, 2351 Wr. Neudorf (AT)
(72) Erfinder: ZOISTER, Stefan, 2351 Wiener Neudorf (AT); BIEL, Stefan, 2351 Wiener Neudorf (AT); KEPLINGER, Jürgen, 2351 Wiener Neudorf (AT)
(74) Vertreter: Gibler & Poth Patentanwälte KG

(56) Entgegenhaltungen:
- EP-A1- 2 933 114
- EP-A1- 4 063 138
- CN-A- 101 377 893
- DE-A1- 102018 103 236

## Beschreibung

Die Erfindung betrifft ein Verfahren zur Erzeugung eines optisch maschinenlesbaren Identifikators auf einer Verpackungsfolie gemäß dem Oberbegriff des Patentanspruches 1.

Produktpiraterie ist nicht nur ein großes Problem für pharmazeutische Produkte, sondern auch für Produkte des täglichen Lebens, wie beispielsweise für Lebensmittel, Hygieneartikel, Haushaltspflegeprodukte, elektronische Geräte, Automobilteile oder Freizeitartikel. Die Echtheitsprüfung dieser Produkte ist wichtig und selbst mit bekannten integrierten Sicherheitsmerkmalen von Banknoten oder Dokumenten wie beispielsweise optisch diffraktiven Hologrammen, 2D-Farbverschiebungsdrucken oder animierten Merkmalen auf der Basis von Fresnellinsen oft nicht einfach zu bewerkstelligen.

Es ist bekannt, dass optisch erkennbare Merkmale wie Quick Response-Codes (QR), Dot Matrix (DMC) oder Dotcodes leicht zu kopieren und zu fälschen sind. Hierzu können diese Codes auf einer Verpackung überklebt oder anderweitig manipuliert werden, um beispielsweise eine ältere Charge als jüngere Charge auszugeben.

Es ist auch bekannt, Verpackungsfolien mechanisch zu prägen bzw. zu stanzen. Hierzu müssen jedoch nach jedem Batch bzw. nach jeder Charge die mechanischen Vorrichtungen entsprechend für neue Identifikatoren verstellt werden, was zeitaufwändig und umständlich ist.

Aus der EP 4 063 138 A1 ist ein Aufzeichnungsmedium umfassend ein Basismaterial, eine Druckschicht und eine wärmesensitive Aufzeichnungsschicht bekannt. In die wärmesensitive Aufzeichnungsschicht wird mittels eines Lasers ein Bild, beispielsweise ein QR-Code oder ein Barcode, ausgebildet. Die Druckschicht stellt den Hintergrund des Bildes, welches in der wärmesensitiven Aufzeichnungsschicht ausgebildet wird, dar, und schützt das Basismaterial vor dem Laserstrahl.

Aus der DE 10 2018 103 236 A1 ist ein Sicherheitselement umfassend zwei Sicherheitsmerkmale, welche im Register zueinander angeordnet sind, bekannt. Die Sicherheitsmerkmale genieren einen optisch variablen Effekt mittels Farben, wobei sich die einzelnen Farben voneinander unterscheiden.

Aufgabe der Erfindung ist es daher ein Verfahren zur Erzeugung eines optisch maschinenlesbaren Identifikators auf einer Verpackungsfolie eingangs genannter Art anzugeben, mit welchem die genannten Nachteile vermieden werden können, mit welchem ein optisch maschinenlesbarer Identifikator einfach und schnell auf einer Verpackungsfolie erzeugt werden kann, wobei auf dem optisch maschinenlesbaren Identifikator eine Manipulation eindeutig und zuverlässig feststellbar ist.

Erfindungsgemäß wird dies durch die Merkmale des Patentanspruches 1 erreicht.

Dadurch, dass der optisch maschinenlesbare Identifikator mittels eines gebündelten Lichtstrahls erzeugt wird, wobei in der ersten Schicht ein Farbumschlag und eine thermische Reaktion in der zweiten Schicht durch eine lokale Wärmeübertragung von der ersten Schicht auf die zweite Schicht hervorgerufen wird, wodurch in der zweiten Schicht zusätzlich eine zumindest optisch erfassbare Abbildung des optisch maschinenlesbaren Identifikators ausgebildet wird, ergibt sich der Vorteil, dass der optisch maschinenlesbare Identifikator einfach und schnell auf einer Verpackungsfolie erzeugt werden kann, wobei durch die zusätzliche Abbildung in der zweiten Schicht gleichzeitig ein weiters Sicherheitsmerkmal erzeugt wird. Durch einen Abgleich des optisch maschinenlesbaren Identifikators mit der Abbildung kann die Echtheit eines Produktes einfach und zuverlässig festgestellt werden.

Die Erfindung betrifft weiters eine Verpackungsfolie mit wenigstens einem optisch maschinenlesbaren Identifikator gemäß dem Patentanspruch 4.

Die Erfindung hat daher weiters die Aufgabe eine Verpackungsfolie mit wenigstens einem optisch maschinenlesbaren Identifikator der eingangs genannten Art anzugeben, mit welchem die genannten Nachteile vermieden werden können, mit welchem die Echtheit eines verpackten Produktes einfach und zuverlässig verifiziert werden kann.

Erfindungsgemäß wird dies durch die Merkmale des Patentanspruches 4 erreicht.

Dadurch, dass auf der ersten Schicht ein Farbumschlag in lokalen Bereichen stattgefunden hat und somit der optisch maschinenlesbare Identifikator optisch auf der ersten Schicht erfassbar ist und in der zweiten Schicht zusätzlich eine zumindest optisch erfassbare Abbildung des optisch maschinenlesbaren Identifikators ausgebildet ist, kann der optisch maschinenlesbare Identifikator der ersten Schicht mit der Abbildung des optisch maschinenlesbaren Identifikators der zweiten Schicht abgeglichen werden, um dessen Echtheit zu verifizieren.

Weiters ist eine Verpackung umfassend eine Verpackungsfolie mit einem optisch maschinenlesbaren Identifikator vorgesehen.

Weiters ist auch ein computerimplementiertes Verfahren zur Verifizierung des optisch maschinenlesbaren Identifikators auf einer Verpackungsfolie vorgesehen.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine beispielhafte Darstellung einer ersten bevorzugten Ausführungsform einer Verpackungsfolie mit einem optisch maschinenlesbaren Identifikator in einer Schnittansicht, und
Fig. 2 eine beispielhafte Darstellung einer zweiten bevorzugten Ausführungsform einer Verpackungsfolie mit einem optisch maschinenlesbaren Identifikator in einer Schnittansicht.

Die Dickenverhältnisse der in den Figuren dargestellten Schichten müssen nicht den tatsächlichen Dickenverhältnissen entsprechen.

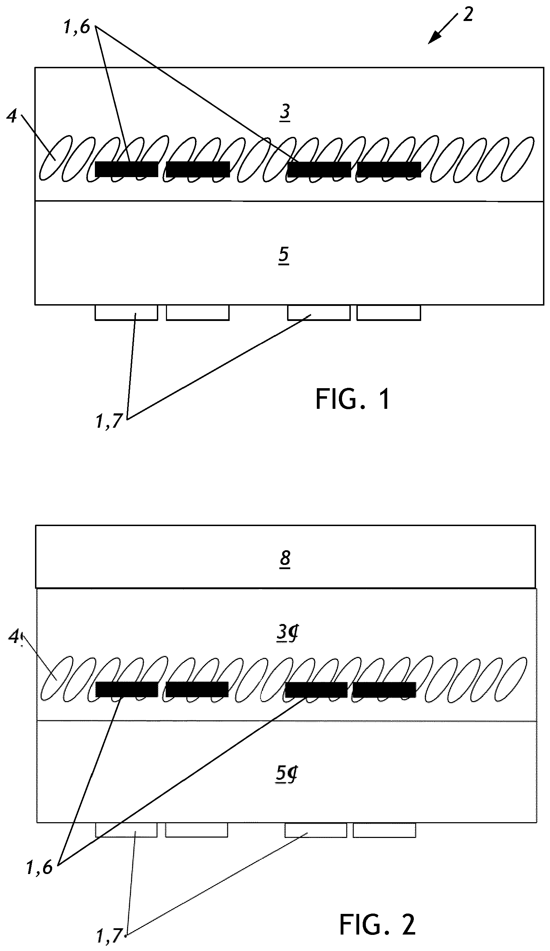

Die Fig. 1 und 2 zeigen zumindest Teile bevorzugter Ausführungsformen einer Verpackungsfolie 2 mit wenigstens einem optisch maschinenlesbaren Identifikator 1, wobei die Verpackungsfolie 2 wenigstens eine erste Schicht 3 umfassend photosensitive Stoffe 6 und wenigstens eine, auf der wenigstens einen ersten Schicht 3 zumindest mittelbar angeordnete, zweite Schicht 5 umfasst, wobei der optisch maschinenlesbare Identifikator 1 in der wenigstens einen ersten Schicht 3 als lokaler Farbumschlag 6 ausgebildet ist, wobei in der wenigstens einen zweiten Schicht 5 eine zumindest optisch erfassbare Abbildung 7 des optisch maschinenlesbaren Identifikators 1 ausgebildet ist.

Dadurch, dass auf der ersten Schicht 3 ein Farbumschlag 6 in vorgebbaren lokalen Bereichen stattgefunden hat und somit der optisch maschinenlesbare Identifikator 1 optisch auf der ersten Schicht 3 erfassbar ist und in der zweiten Schicht 5 zusätzlich eine zumindest optisch erfassbare Abbildung 7 des optisch maschinenlesbaren Identifikators 1 ausgebildet ist, kann der optisch maschinenlesbare Identifikator 1 der ersten Schicht 3 mit der zumindest optisch erfassbaren Abbildung 7 des optisch maschinenlesbaren Identifikators 1 der zweiten Schicht 5 abgeglichen werden, um dessen Echtheit zu verifizieren.

Es ist weiters ein Verfahren zur Erzeugung eines optisch maschinenlesbaren Identifikators 1 auf einer Verpackungsfolie 2 vorgesehen, wobei die Verpackungsfolie 2 wenigstens eine erste Schicht 3 umfassend photosensitive Stoffe 4 und wenigstens eine, auf der ersten Schicht 3 zumindest mittelbar angeordnete, zweite Schicht 5 umfasst, wobei zur Erzeugung des optisch maschinenlesbaren Identifikators 1 ein gebündelter Lichtstrahl vorgebbar auf die erste Schicht 3 gerichtet wird, wobei der gebündelte Lichtstrahl zumindest teilweise von der ersten Schicht 3 absorbiert wird, wobei der gebündelter Lichtstrahl in der ersten Schicht 3 einen Farbumschlag 6 zur Erzeugung des optisch maschinenlesbaren Identifikators 1 hervorruft und lokal zumindest teilweise in thermische Energie umgewandelt wird, wobei durch die thermische Energie eine lokale Wärmeübertragung auf die zweite Schicht 5 stattfindet und eine thermische Reaktion in der zweiten Schicht 5 hervorgerufen wird, wodurch in der zweiten Schicht 5 zusätzlich eine zumindest optisch erfassbare Abbildung 7 des optisch maschinenlesbaren Identifikators 1 ausgebildet wird.

Dadurch, dass der optisch maschinenlesbare Identifikator 1 mittels eines gebündelten Lichtstrahls erzeugt wird, wobei in der ersten Schicht 3 ein Farbumschlag 6 und eine thermische Reaktion in der zweiten Schicht 5 durch eine lokale Wärmeübertragung von der ersten Schicht 3 auf die zweite Schicht 5 hervorgerufen wird, wodurch in der zweiten Schicht 5 zusätzlich eine zumindest optisch erfassbare Abbildung 7 des optisch maschinenlesbaren Identifikators 1 ausgebildet wird, ergibt sich der Vorteil, dass der optisch maschinenlesbare Identifikator 1 einfach und schnell auf einer Verpackungsfolie 2 erzeugt werden kann, wobei durch die zusätzliche Abbildung 7 in der zweiten Schicht 5 gleichzeitig ein weiters Sicherheitsmerkmal erzeugt wird. Durch einen Abgleich des optisch maschinenlesbaren Identifikators 1 mit der Abbildung 7 kann die Echtheit eines Produktes einfach und zuverlässig festgestellt werden.

Die Verpackungsfolie 2 umfasst wenigstens einen optisch maschinenlesbaren Identifikator 1. Die Verpackungsfolie 2 umfasst wenigstens eine erste Schicht 3, welche photosensitive Stoffe 4 umfasst und wenigstens eine, auf der wenigstens einen ersten Schicht 3 zumindest mittelbar angeordnete, zweite Schicht 5. Der optisch maschinenlesbare Identifikator 1 ist in der wenigstens einen ersten Schicht 3 als lokaler Farbumschlag 6 ausgebildet ist, wobei in der wenigstens einen zweiten Schicht 5 die zumindest optisch erfassbare Abbildung 7 des optisch maschinenlesbaren Identifikators 1 ausgebildet ist. Ein Schnitt einer ersten bevorzugten Ausführungsform der Verpackungsfolie 2 ist beispielhaft in Fig. 1 dargestellt.

Der optisch maschinenlesbare Identifikator 1 kann bevorzugt ein 2D-Code, insbesondere ein Quick Response-Code (QR), eine Dot Matrix (DMC) oder ein Dotcode, oder ein eindimensionaler Code wie ein Barcode sein. Zur Erzeugung des optisch maschinenlesbaren Identifikators 1 wird ein gebündelter Lichtstrahl vorgebbar auf die erste Schicht 3 gerichtet, wobei der gebündelte Lichtstrahl zumindest teilweise von der ersten Schicht 3 absorbiert wird, wodurch in der ersten Schicht 3 lokal in dem Bereich, in welchem der gebündelte Lichtstrahl zumindest teilweise von der ersten Schicht 3 absorbiert wird, ein Farbumschlag 6 hervorgerufen wird.

Bevorzugt kann zur Erzeugung des optisch maschinenlesbaren Identifikators 1 der gebündelte Lichtstrahl über einen Bereich der Verpackungsfolie 2 rasterförmig bewegt werden. Hierbei kann das Auftreffen des gebündelten Lichtstrahles auf die Verpackungsfolie mittels eines Shutters oder einer vergleichbaren Einrichtung gesteuert werden.

Lokal wird hierbei in der ersten Schicht 3 die Energie des gebündelten Lichtstrahles zumindest teilweise in thermische Energie umgewandelt, wobei durch die thermische Energie in der ersten Schicht 3 eine lokale Wärmeübertragung auf die zweite Schicht 5 stattfindet. Die Umwandlung der Energie des gebündelten Lichtstrahles in thermische Energie findet hierbei in jenen Bereichen der ersten Schicht 3 statt, in welchen der gebündelte Lichtstrahl zumindest teilweise von der ersten Schicht 3 absorbiert wird. Die in der ersten Schicht 3 sozusagen freigewordene bzw. umgewandelte thermische Energie wird auf die benachbarte zweite Schicht 5 übertragen, wodurch eine thermische Reaktion in der zweiten Schicht 5 hervorgerufen wird, wodurch in der zweiten Schicht 5 zusätzlich eine zumindest optisch erfassbare Abbildung 7 des optisch maschinenlesbaren Identifikators 1 ausgebildet wird. Der gebündelte Lichtstrahl wird hierbei zweifach genutzt, nämlich zur Erzeugung des Farbumschlags 6 in der ersten Schicht 3 und zur lokalen Erwärmung.

Die zumindest optisch erfassbare Abbildung 7 in der zweiten Schicht 5 ist bevorzugt eine optisch erfassbare Veränderung der zweiten Schicht 5, welche sich durch das konkrete Muster des maschinenlesbaren Identifikators 1 in der ersten Schicht 3 ergibt. Dabei muss das konkrete Muster der zumindest optisch erfassbaren Abbildung 7 nicht zwingend ident zu dem Muster des maschinenlesbaren Identifikators 1 sein. Beispielsweise kann ein Element des maschinenlesbaren Identifikators 1, insbesondere ein, einem Bit entsprechendes Quadrat oder Punkt, verzerrt, insbesondere aufgeweitet, in der Abbildung 7 abgebildet sein. Auch können benachbarte Elemente des maschinenlesbaren Identifikators 1 in der Abbildung 7 ineinander verschwimmen. Derartige Fehler können beispielsweise durch die ungerichtete Wärmeübertragung sowie durch eine spezielle Charakteristik der thermischen Reaktion in der zweiten Schicht 5 entstehen. Die Stärke der Verzerrung bzw. der Ausdehnung der einzelnen Elemente hängt jedoch von der Art der thermischen Reaktion, von der Distanz des Wärmeübergangs sowie von dem Verhältnis der Schichtdicken zueinander ab. Es ist jedoch vorgesehen, dass die zumindest optisch erfassbare Abbildung 7 in einem Zusammenhang mit dem optisch maschinenlesbaren Identifikator 1 steht. Ein vollständiges Verschwimmen oder eine vollständige Verzerrung der einzelnen Elemente des Musters ist nicht vorgesehen. Daher finden eine Verzerrung bzw. eine Ausdehnung der einzelnen Elemente in einem Toleranzbereich statt, sodass das Muster der zumindest optisch erfassbaren Abbildung 7 trotz Aufweitungen oder Verzerrungen noch in einen eindeutigen Zusammenhang mit dem Muster des optisch maschinenlesbaren Identifikators 1 gebracht werden kann.

Bevorzugt kann vorgesehen sein, dass sich aus der Abbildung 7 der maschinenlesbare Identifikator 1 direkt ableiten lässt. Aus dem Muster der Abbildung 7 kann daher das Muster des maschinenlesbaren Identifikators 1, und damit auch dessen Information, direkt abgeleitet werden. Der Zusammenhang zwischen dem maschinenlesbare Identifikator 1 und der Abbildung 7 kann daher bijektiv sein. Hierbei kann insbesondere die Verzerrung bei der Erstellung der Abbildung 7 derart gering sein, dass jedes Element des maschinenlesbaren Identifikators 1 in der Abbildung 7 eindeutig und direkt erfassbar ist. Dies hat den Vorteil, dass zum Abgleich des maschinenlesbaren Identifikators 1 mit der Abbildung 7 die auslesbaren Informationen direkt verglichen werden können.

Bevorzugt ist der optisch maschinenlesbare Identifikator 1 in der ersten Schicht 3 von der Außenseite aus optisch erfassbar, wobei die Abbildung 7 des optisch maschinenlesbaren Identifikators 1 in der zweiten Schicht 5 von der Innenseite optisch erfassbar ist. Die Abbildung 7 in der zweiten Schicht 5 ist dann spiegelverkehrt zu dem optisch maschinenlesbaren Identifikator 1 in der ersten Schicht 3.

Der optisch maschinenlesbare Identifikator 1 umfasst den Farbumschlag 6 in der ersten Schicht 3. Der Farbumschlag 6 kann hierbei beispielsweise von weiß zu schwarz oder von transparent zu weiß erfolgen.

Die zweite Schicht 5 kann bevorzugt wenigstens einen thermoplastischen Kunststoff umfassen oder aus wenigstens einem thermoplastischen Kunststoff bestehen. Als thermoplastischen Kunststoff bzw. Thermoplast können bevorzugt Polyolefine wie beispielsweise Polyethylen (PE), Polypropylen (PP), aber auch Acrylnitril-Butadien-Styrol (ABS), Polyamide (PA), Polylactid (PLA), Polymethylmethacrylat (PMMA), Polycarbonat (PC), Polyethylenterephthalat (PET), Polystyrol (PS), Polyetheretherketon (PEEK) oder Polyvinylchlorid (PVC) verwendet werden.

Es kann bevorzugt vorgesehen sein, dass durch die thermische Reaktion in der zweiten Schicht 5 eine lokale Änderung der Dicke der zweiten Schicht 5 hervorgerufen wird.

Die zumindest optisch erfassbare Abbildung 7 kann als Farbumschlag bzw. als lokale Änderung der Farbe und/oder als Erhebung ausgebildet sein. Sofern die optisch erfassbare Abbildung 7 als Erhebung ausgebildet ist, ragt diese hierbei von der Oberfläche der zweiten Schicht 5 ab. Hierzu ist das Volumen der zweiten Schicht 5 im Bereich der Erhebung irreversibel lokal erhöht.

Die Erhebungen bilden auf der Oberfläche der zweiten Schicht 5 eine Struktur aus, welche auch haptisch wahrgenommen werden kann und welche eine Abbildung 7 des optisch maschinenlesbaren Identifikators 1 ist.

In einem Verwendungszustand als Verpackung weist die Verpackungsfolie 2 eine äußere und eine innere Schicht auf, wobei die äußere Schicht die Außenseite ausbildet und die innere Schicht die Innenseite der Verpackung ausbildet. Die innere Schicht bzw. Innenseite ist hierbei dem verpackten Produkt zugewandt und die äußere Schicht bzw. Außenseite ist dem Produkt abgewandt.

Es kann bevorzugt vorgesehen sein, dass eine der ersten Schicht 3 im Schichtaufbau der Verpackungsfolie 2 nachfolgende Schicht undurchsichtig ausgebildet ist, wobei die erste Schicht 3 bevorzugt die äußere Schicht einer Verpackung ausbildet. Die zweite Schicht 5 kann die Innenseite der Verpackung ausbilden, oder es kann auf der zweiten Schicht 5 wenigstens eine weitere Schicht angeordnet sein.

Besonders bevorzugt kann vorgesehen sein, dass in einem Bereich der Verpackungsfolie 2 zwischen der ersten Schicht 3 und einer Innenseite der Verpackungsfolie 2 zumindest eine Schicht, insbesondere die zweite Schicht 5, undurchsichtig ausgebildet ist. Hierbei ist die zweite Schicht 5 zwischen der ersten Schicht 3 und der Innenseite angeordnet. Die zweite Schicht 5 kann insbesondere benachbart zu der Innenseite der Verpackungsfolie 2 angeordnet sein.

Es kann ein Schichtaufbau vorgesehen sein, wobei die erste Schicht 3 die Außenseite der Verpackungsfolie ausbildet, wobei nachfolgend zur ersten Schicht 3 die zweite Schicht 5 angeordnet ist und nachfolgend zu der zweiten Schicht 5 eine weitere Schicht angeordnet ist, welche die Innenseite der Verpackung ausbildet.

Es kann alternativ vorgesehen sein, dass die zweite Schicht 5 die Innenseite der Verpackung ausbildet.

Der Begriff undurchsichtig ist hierbei auf das menschliche Auge bezogen.

Selbst ohne auf, bzw. durch die zweite Schicht 5 sichtbaren Farbumschlag kann somit dennoch eine Abbildung 7 des optisch maschinenlesbaren Identifikators 1 identifiziert werden. Dies ist insbesondere dann wichtig, wenn eine der ersten Schicht 3 nachfolgende Schicht, beispielsweise die zweite Schicht 5, undurchsichtig ausgebildet ist. Eine der ersten Schicht 3 nachfolgende undurchsichtige Schicht lässt bei einer verschlossenen Verpackung keinen Hinweis zu, wie die Abbildung 7 des optisch maschinenlesbaren Identifikators 1 auf der zweiten Schicht 5, demnach auf der Innenseite der Verpackung, aussieht, wodurch die Fälschungssicherheit erhöht wird.

Bevorzugt kann die undurchsichtige Schicht zwischen der ersten Schicht 3 und der zweiten Schicht 5 angeordnet sein. Dadurch ist die zweite Schicht 5 mit der Abbildung 7 von der Innenseite direkt sichtbar.

Die undurchsichtige Schicht kann insbesondere eine Metallisierung sein.

Je nach Vorgabe der pharmazeutischen Industrie oder der Lebensmittelindustrie müssen manche Verpackungen für gewisse Produkte undurchsichtig sein, da diese insbesondere mit Sonnenlicht reagieren können.

Es kann auch besonders bevorzugt vorgesehen sein, dass die erste Schicht 3 zwischen der zweiten Schicht 5 und einer dritten Schicht 8 angeordnet ist, wobei der gebündelte Lichtstrahl zuerst die dritte Schicht 8 durchdringt bevor er auf die erste Schicht 3 trifft. Die dritte Schicht 8 kann hierbei eine Schutzschicht sein, welche die erste Schicht 3 und/oder die zweite Schicht 5 vor äußeren Einflüssen schützt. Im Falle einer Verpackung kann die dritte Schicht 8 bevorzugt die Außenseite der Verpackung ausbilden oder zumindest an der Außenseite der Verpackung angrenzen. Die dritte Schicht 8 muss hierbei den gebündelten Lichtstrahl nicht absorbieren oder anderweitig mit dem Lichtstrahl interagieren, da bei der gegenständlichen Erfindung der Farbumschlag in der ersten Schicht 3 und die Erzeugung einer zumindest optisch erfassbaren Abbildung 7 des optisch maschinenlesbaren Identifikators 1 in der zweiten Schicht 5 wichtig ist. Ein Schnitt einer zweiten bevorzugten Ausführungsform einer Verpackungsfolie 2 mit drei Schichten 3,5,8 ist in Fig. 2 beispielhaft dargestellt.

Es kann bevorzugt vorgesehen sein, dass zur Erzeugung des gebündelten Lichtstrahles ein Laser, insbesondere ein CO₂-Laser, verwendet wird. Mittels eines Lasers kann der der optisch maschinenlesbare Identifikator 1 einfach, schnell und genau erzeugt werden. Sofern sich der optisch maschinenlesbare Identifikator 1 nach einer Charge ändert, bedingt dies lediglich eine einfach zu bewerkstelligende Änderung in einer Software, damit der Laser den neuen optisch maschinenlesbaren Identifikator 1 auf der Verpackungsfolie 2 erzeugen kann. Der Wellenlängenbereich des Lasers muss nicht im sichtbaren Bereich liegen, sondern kann auch im ultravioletten Bereich oder im Infrarotbereich liegen.

Es kann vorgesehen sein, dass die zweite Schicht 5 in einem Verwendungszustand der Verpackungsfolie 2, demnach als Verpackung, als Barriereschicht fungiert, welche Sauerstoff und Feuchtigkeit davon abhält in die Verpackung einzudringen.

Es kann vorgesehen sein, dass an der zweiten Schicht 5 eine vierte Schicht angeordnet ist, welche eine Barriereschicht darstellt und bevorzugt EthylenVinylalkohol-Copolyer (EVOH) umfasst oder aus EVOH besteht. Alternativ eignet sich hierzu auch insbesondere eine Metallisierung, welcher an der zweiten Schicht 5 angeordnet ist. Eine Metallisierung ist eine sehr dünne Beschichtung mit einem Metall, welche bevorzugt eine Dicke in dem sub-um-Bereich aufweist. Beispielsweise kann die Metallisierung eine Dicke von 50 nm bis 300 nm aufweisen.

Die Verpackung kann bevorzugt eine Verpackung für Lebensmittel, für medizinische Produkte, für pharmazeutische Produkte oder für andere Konsumgüter sein. Die Verpackung kann beispielsweise eine Aufreißverpackung sein.

Je nach Anwendungsgebiet und Hygienevorschriften kann die Verpackung auch eine chemische Beschichtung aufweisen.

Es kann bevorzugt vorgesehen sein, dass die photosensitiven Stoffe 6 Pigmente, insbesondere Pigmente auf Mica-Basis, umfassen. Photosensitive Stoffe 6 sind Stoffe, welche bei Kontakt mit Licht wenigstens eine Ihrer Eigenschaften ändern. Im gegenständlichen Fall reagieren die photosensitiven Stoffe bei der Einstrahlung des gebündelten Lichtstrahles, wodurch ein Farbumschlag stattfindet.

Die erste Schicht 3 kann als photosensitive bzw. lasersensitive Schicht bezeichnet werden.

Es kann besonders bevorzugt vorgesehen sein, dass die erste Schicht 3 lediglich in jenem Bereich vorhanden ist, in welchem der optisch maschinenlesbare Identifikator 1 angeordnet ist. Hierdurch können Kosten gespart werden. Weiters wird hierdurch vermieden, dass ein Manipulationsversuch, beispielsweise ein zweiter und gefälschter Identifikator, auf einer anderen Stelle der Verpackung stattfinden kann.

Die wenigstens eine erste Schicht 3 kann hierzu bevorzugt auf der wenigstens einen zweiten Schicht 5 aufgedruckt sein.

Folgend werden Praxisbeispiele für den Schichtaufbau der Verpackungsfolie 2 genannt:
Bevorzugt kann die Verpackungsfolie eine 20 µm dicke Schicht aus orientiertem bzw. gestrecktem Polypropylen (OPP) benachbart zu einer lasersensitiven Schicht, welche die erste Schicht 3 darstellt, aufweisen, wobei an der lasersensitiven Schicht eine im Vergleich zu den weiteren Kunststoffschichten dünne Klebeschicht angeordnet ist, wobei an der Klebeschicht eine 20 µm dicke Schicht aus orientiertem bzw. gestrecktem Polypropylen (OPP) angeordnet ist, wobei an der, der Klebeschicht abgewandten Seite der Schicht aus orientiertem Polypropylen eine Aluminium-Metallisierung angeordnet ist, und an der Metallisierung eine 30 µm dicke Schicht aus einem ungestreckten Polypropylen (CPP) angeordnet ist.

Grundsätzlich stellen hierbei die zweite Schicht aus OPP und die Schicht aus CPP zweite Schichten 5 dar.

Weiters kann vorgesehen sein, dass an einer 25 µm dicken Schicht aus Polyethylen, hergestellt nach dem MDO-Verfahren (Machine-Direction-Orientation, MDO-PE) eine lasersensitiven Schicht, welche die erste Schicht 3 darstellt, angeordnet ist, wobei an der lasersensitiven Schicht eine im Vergleich zu den weiteren Kunststoffschichten dünne Klebeschicht angeordnet ist und an der Klebeschicht eine 55 µm dicke Schicht aus Polyethylen angeordnet ist, welche der wenigstens einen zweiten Schicht 5 entspricht.

Es kann auch vorgesehen sein, dass die Verpackungsfolie eine 20 µm dicke Schicht aus orientiertem bzw. gestrecktem Polypropylen (OPP) aufweist, wobei an dieser Schicht eine dünne Klebeschicht angeordnet ist, wobei an der Klebeschicht eine lasersensitive Schicht, welche die erste Schicht 3 darstellt, aufweist, wobei an der lasersensitiven Schicht eine 12 µm dicke Polyethylenterephthalatschicht (PET) angeordnet ist, und an der Polyethylenterephthalatschicht eine 30 µm dicke Schicht aus einem ungestreckten Polypropylen (CPP) angeordnet ist. Hierbei stellen die Polyethylenterephthalatschicht und die Schicht aus einem ungestreckten Polypropylen die zweite Schicht 5 dar.

Es ist weiters ein computerimplementiertes Verfahren zur Verifizierung des optisch maschinenlesbaren Identifikators 1 auf einer Verpackungsfolie 2 vorgesehen, wobei in einem ersten Schritt der optisch maschinenlesbare Identifikator 1 auf der ersten Schicht 3 mittels einer Kamera optisch eingelesen wird, wobei in einem nachfolgenden Schritt ein auf einem Client installiertes und mit der Kamera zusammenwirkendes Verifizierungsprogramm den Nutzer auffordert, die optisch erfassbare Abbildung 7 auf der zweiten Schicht 5 optisch einzulesen, wobei nach dem Einlesen der optisch erfassbaren Abbildung 7 auf der zweiten Schicht 5 das Verifizierungsprogramm den optisch maschinenlesbaren Identifikator 1 der ersten Schicht 3 mit der optisch erfassbaren Abbildung 7 der zweiten Schicht 5 vergleicht und ein Signal betreffend einer Übereinstimmung ausgibt.

Als Kamera kann bevorzugt eine Kamera eines Smartphones verwendet werden, welche den optisch maschinenlesbaren Identifikator 1 in einem ersten Schritt einscannt. Im Falle eines Smartphones als Client fordert ein auf dem Smartphone installiertes und mit der Kamera zusammenwirkendes Verifizierungsprogramm den Nutzer auf, den optisch maschinenlesbaren Identifikator 1 auf der zweiten Schicht 5 optisch einzulesen, demnach einzuscannen. Im Falle eines fertig verpackten Produktes muss die Verpackung, im Falle einer der ersten Schicht 3 nachfolgenden undurchsichtigen Schicht, geöffnet werden, um auf der zweiten Schicht 5 das Abbild des optisch maschinenlesbaren Identifikators 1 optisch einzulesen bzw. einzuscannen.

Das Verifizierungsprogramm vergleicht den optisch maschinenlesbaren Identifikator 1 der ersten Schicht 3 mit der Abbildung 7 des optisch maschinenlesbaren Identifikators 1 der zweiten Schicht 5 und gibt ein Signal betreffend eine Übereinstimmung aus.

Hierdurch kann bei nicht zerstörungsfrei öffenbaren Verpackungen, insbesondere bei zusätzlich nicht durchsichtigen Verpackungen, zuverlässig verifiziert werden, ob der optisch maschinenlesbare Identifikator 1 der ersten Schicht 3 verändert wurde, wodurch ein hoher Sicherheitslevel erreicht wird, da die Codierung innerhalb der Schichten 3, 5 geschieht. Eine Manipulation der Codes ohne Zerstörung der Schichten 3, 5 ist somit nicht möglich.

Bevorzugt kann das Verifizierungsprogramm von der einen zumindest optisch erfassbaren Abbildung 7 auf den optisch maschinenlesbaren Identifikator 1 rückschließen und etwaige Verzerrungen in der zumindest optisch erfassbaren Abbildung 7 mitberücksichtigen. Das bedeutet, dass das Verifizierungsprogramm auch bei einer leicht verschwommenen bzw. verzerrten zumindest optisch erfassbaren Abbildung 7 auf den optisch maschinenlesbaren Identifikator 1 rückschließen und überprüfen kann, ob die zumindest optisch erfassbare Abbildung 7 zu dem optisch maschinenlesbaren Identifikator 1 passt bzw. in einem Zusammenhang mit diesem steht.

Es kann auch bevorzugt vorgesehen sein, dass jedem optisch maschinenlesbaren Identifikator 1 ein spezifischer UUID auf einem Server zugewiesen und validiert ist, wobei das Verifizierungsprogramm zum Abgleich der Übereinstimmung Kontakt zu dem Server aufbaut und überprüft, ob eine spezifische UUID für den optisch maschinenlesbaren Identifikator 1 vorhanden ist, wobei bei jedem Datenlesevorgang eines Datenpakets die Daten zunächst über APIs verifiziert werden, indem ein Krypto-Hash berechnet und mit einem gespeicherten Hash eines Pakets in einer zugewiesenen Blockchain verglichen wird.

Ein UUID (Universally unique identifier) ist eine 128-Bit-Zahl, welche zur Identifikation von Informationen in Computersystemen verwendet wird und welche nur äußerst schwer zu manipulieren bzw. zu duplizieren ist.

Jeder einzelne optisch maschinenlesbare Identifikator 1 ist bevorzugt direkt mit einer spezifischen UUID (12 alphanumerische Ziffern nach GS1) verknüpft und wird auf einer Plattform über angeschlossene Maschinen beglaubigt. Die UUIDs werden von Lesegeräten gelesen und validiert und dann an einen FTP-Server gesendet.

Sobald eine Charge fertig ist, wird sie von einer entsprechenden Software verarbeitet und registriert.

Die Sicherheit und Integrität der Daten wird durch die Verwendung von Krypto-Hashes als Beweismittel und durch die Speicherung der Daten in einem Backend, das auf der Blockchain-Technologie basiert, gewährleistet. Die beteiligten Akteure innerhalb der Lieferkette verwenden ihre öffentlich-privaten Schlüssel, die in einer gesicherten Brieftasche (wallet) gespeichert sind, um die hinzugefügten Informationen zu signieren und Zugang zu den vorhandenen Daten der einzelnen Pakete zu erhalten.

Bei jedem Datenlesevorgang eines Pakets werden die Daten zunächst über Programmierschnittstellen (APIs) verifiziert, indem ein Krypto-Hash berechnet und mit dem gespeicherten Hash eines Pakets in der Blockchain verglichen wird. Hierdurch wird die Fälschungssicherheit von Produkten stark erhöht und die Sicherheit und Integrität der Daten auf dezentrale Weise gewährleistet.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Bei Wertebereichen sind die Endpunkte mitumfasst, sofern es sich aus dem Kontext nicht anders ergibt.

## Patentansprüche

1. Verfahren zur Erzeugung eines optisch maschinenlesbaren Identifikators (1) auf einer Verpackungsfolie (2), wobei die Verpackungsfolie (2) wenigstens eine erste Schicht (3) umfassend photosensitive Stoffe (4) und wenigstens eine, auf der ersten Schicht (3) zumindest mittelbar angeordnete, zweite Schicht (5) umfasst, wobei zur Erzeugung des optisch maschinenlesbaren Identifikators (1) ein gebündelter Lichtstrahl vorgebbar auf die erste Schicht (3) gerichtet wird, wobei der gebündelte Lichtstrahl zumindest teilweise von der ersten Schicht (3) absorbiert wird, wobei der gebündelter Lichtstrahl in der ersten Schicht (3) einen Farbumschlag (6) zur Erzeugung des optisch maschinenlesbaren Identifikators (1) hervorruft und lokal zumindest teilweise in thermische Energie umgewandelt wird, **dadurch gekennzeichnet, dass** durch die thermische Energie eine lokale Wärmeübertragung auf die zweite Schicht (5) stattfindet und eine thermische Reaktion in der zweiten Schicht (5) hervorgerufen wird, wodurch in der zweiten Schicht (5) zusätzlich eine zumindest optisch erfassbare Abbildung (7) des optisch maschinenlesbaren Identifikators (1) ausgebildet wird.

2. Verfahren nach Anspruch 1, **dadurch gekennzeichnet, dass** durch die thermische Reaktion in der zweiten Schicht (5) eine lokale Änderung der Dicke der zweiten Schicht (5) hervorgerufen wird.

3. Verfahren nach Anspruch 1 oder 2, **dadurch gekennzeichnet, dass** die erste Schicht (3) zwischen der zweiten Schicht (5) und einer dritten Schicht (8) angeordnet ist, wobei der gebündelte Lichtstrahl zuerst die dritte Schicht (8) durchdringt bevor er auf die erste Schicht (3) trifft.

4. Verpackungsfolie (2) mit wenigstens einem optisch maschinenlesbaren Identifikator (1), wobei die Verpackungsfolie (2) wenigstens eine erste Schicht (3) umfassend photosensitive Stoffe (6) und wenigstens eine, auf der wenigstens einen ersten Schicht (3) zumindest mittelbar angeordnete, zweite Schicht (5) umfasst, wobei der optisch maschinenlesbare Identifikator (1) in der wenigstens einen ersten Schicht (3) als lokaler Farbumschlag (6) ausgebildet ist, **dadurch gekennzeichnet, dass** in der wenigstens einen zweiten Schicht (5) eine zumindest optisch erfassbare Abbildung (7) des optisch maschinenlesbaren Identifikators (1) ausgebildet ist, dass die zumindest optisch erfassbare Abbildung (7) in der zweiten Schicht (5) eine optisch erfassbare Veränderung der zweiten Schicht (5) ist, welche sich durch das konkrete Muster des maschinenlesbaren Identifikators (1) in der ersten Schicht (3) ergibt.

5. Verpackungsfolie (2) nach Anspruch 4, **dadurch gekennzeichnet, dass** in einem Bereich der Verpackungsfolie (2) zwischen der ersten Schicht (3) und einer Innenseite der Verpackungsfolie (2) zumindest eine Schicht, insbesondere die zweite Schicht (5), undurchsichtig ausgebildet ist.

6. Verpackungsfolie (2) nach Anspruch 4 oder 5, **dadurch gekennzeichnet, dass** die photosensitiven Stoffe (6) Pigmente, insbesondere Pigmente auf Mica-Basis, umfassen.

7. Verpackungsfolie (2) nach einem der Ansprüche 4 bis 6, **dadurch gekennzeichnet, dass** die wenigstens eine erste Schicht (3) lediglich in jenem Bereich vorhanden ist, in welchem der optisch maschinenlesbare Identifikator (1) angeordnet ist.

8. Verpackung, umfassend eine Verpackungsfolie (2) nach einem der Ansprüche 4 bis 7.

9. Computerimplementiertes Verfahren zur Verifizierung des optisch maschinenlesbaren Identifikators (1) auf einer Verpackungsfolie (2) nach einem der Ansprüche 4 bis 7, wobei in einem ersten Schritt der optisch maschinenlesbare Identifikator (1) auf der ersten Schicht (3) mittels einer Kamera optisch eingelesen wird, wobei in einem nachfolgenden Schritt ein auf einem Client installiertes und mit der Kamera zusammenwirkendes Verifizierungsprogramm den Nutzer auffordert, die zumindest optisch erfassbare Abbildung (7) auf der zweiten Schicht (5) optisch einzulesen, wobei nach dem Einlesen des optisch maschinenlesbaren Identifikators (1) auf der zweiten Schicht (5) das Verifizierungsprogramm den optisch maschinenlesbaren Identifikator (1) der ersten Schicht (3) mit der zumindest optisch erfassbaren Abbildung (7) der zweiten Schicht (5) vergleicht und ein Signal betreffend einer Übereinstimmung ausgibt.

10. Computerimplementiertes Verfahren nach Anspruch 9, wobei jedem optisch maschinenlesbaren Identifikator (1) ein spezifischer UUID auf einem Server zugewiesen und validiert ist, wobei das Verifizierungsprogramm zum Abgleich der Übereinstimmung Kontakt zu dem Server aufbaut und überprüft, ob eine spezifische UUID für den optisch maschinenlesbaren Identifikator (1) vorhanden ist, wobei bei jedem Datenlesevorgang eines Datenpakets die Daten zunächst über APIs verifiziert werden, indem ein Krypto-Hash berechnet und mit einem gespeicherten Hash eines Pakets in einer zugewiesenen Blockchain verglichen wird.

## Claims

1. A method for producing an optically machine-readable identifier (1) on a packaging film (2), wherein the packaging film (2) comprises at least a first layer (3) comprising photosensitive substances (4) and at least a second layer (5) arranged at least indirectly on the first layer (3), wherein a focused light beam is directed onto the first layer (3) in a predetermined manner to produce the optically machine-readable identifier (1), wherein the focused light beam is at least partially absorbed by the first layer (3), wherein the focused light beam causes a color change (6) in the first layer (3) to produce the optically machine-readable identifier (1) and is converted, at least partially, into thermal energy locally, **characterized in that** the thermal energy causes local heat transfer to the second layer (5) and a thermal reaction is caused in the second layer (5), whereby an at least optically detectable image (7) of the optically machine-readable identifier (1) is also formed in the second layer (5).

2. The method according to claim 1, **characterized in that** the thermal reaction in the second layer (5) causes a local change in the thickness of the second layer (5).

3. The method according to claim 1 or 2, **characterized in that** the first layer (3) is arranged between the second layer (5) and a third layer (8), wherein the focused light beam first penetrates the third layer (8) before striking the first layer (3).

4. A packaging film (2) having at least an optically machine-readable identifier (1), wherein the packaging film (2) comprises at least a first layer (3) comprising photosensitive substances (6) and at least a second layer (5) arranged at least indirectly on the at least first layer (3), wherein the optically machine-readable identifier (1) is formed in the at least first layer (3) as a local color change (6), **characterized in that** an at least optically detectable image (7) of the optically machine-readable identifier (1) is formed in the at least second layer (5), **in that** the at least optically detectable image (7) in the second layer (5) is an optically detectable change of the second layer (5), which results from the specific pattern of the machine-readable identifier (1) in the first layer (3).

5. The packaging film (2) according to claim 4, **characterized in that** at least a layer, in particular the second layer (5), is opaque in a region of the packaging film (2) between the first layer (3) and an inner side of the packaging film (2).

6. The packaging film (2) according to claim 4 or 5, **characterized in that** the photosensitive substances (6) comprise pigments, in particular mica-based pigments.

7. The packaging film (2) according to any of the claims 4 to 6, **characterized in that** the at least first layer (3) is present only in the region in which the optically machine-readable identifier (1) is arranged.

8. A package comprising a packaging film (2) according to any of claims 4 to 7.

9. A computer-implemented method for verifying the optically machine-readable identifier (1) on a packaging film (2) according to any of the claims 4 to 7, wherein, in a first step, the optically machine-readable identifier (1) on the first layer (3) is optically read in by means of a camera, wherein, in a subsequent step, a verification program installed on a client and interacting with the camera prompts the user to optically read the at least optically detectable image (7) on the second layer (5), wherein, after reading the optically machine-readable identifier (1) on the second layer (5), the verification program compares the optically machine-readable identifier (1) of the first layer (3) with the at least optically detectable image (7) of the second layer (5) and emits a signal indicating a match.

10. The computer-implemented method according to claim 9, wherein a specific UUID assigned to each optically machine-readable identifier (1) is validated on a server, wherein the match verification program establishes contact with the server and checks for the presence of a specific UUID for the optically machine-readable identifier (1), wherein at each data read of a data packet, the data is first verified via APIs by calculating a crypto hash and comparing it to a stored hash of a packet in an assigned blockchain.

## Revendications

1. Procédé de production d'un identificateur (1) lisible optiquement par machine sur un film d'emballage (2), le film d'emballage (2) comprenant au moins une première couche (3) comprenant des substances photosensibles (4) et au moins une deuxième couche (5) disposée au moins indirectement sur la première couche (3), un faisceau de lumière focalisé étant dirigé de manière prédéfinissable sur la première couche (3) pour produire l'identificateur (1) lisible optiquement par machine, le faisceau de lumière focalisé étant absorbé au moins partiellement par la première couche (3), le faisceau de lumière focalisé provoquant un changement de couleur (6) dans la première couche (3) pour produire l'identificateur (1) lisible optiquement par machine et étant converti localement au moins partiellement en énergie thermique, **caractérisé en ce qu'**un transfert de chaleur local a lieu sur la deuxième couche (5) par l'énergie thermique et une réaction thermique est provoquée dans la deuxième couche (5), de sorte qu'une image (7) de l'identificateur (1) lisible optiquement est en outre formée dans la deuxième couche (5) au moins optiquement détectable.

2. Procédé selon la revendication 1, **caractérisé en ce que** la réaction thermique dans la deuxième couche (5) provoque une modification locale de l'épaisseur de la deuxième couche (5).

3. Procédé selon la revendication 1 ou 2, **caractérisé en ce que** la première couche (3) est disposée entre la deuxième couche (5) et une troisième couche (8), le faisceau lumineux focalisé traversant d'abord la troisième couche (8) avant de frapper la première couche (3).

4. Film d'emballage (2) avec au moins un identificateur (1) lisible optiquement par machine, le film d'emballage (2) comprenant au moins une première couche (3) comprenant des substances photosensibles (6) et au moins une deuxième couche (5) disposée au moins indirectement sur la au moins une première couche (3), l'identificateur (1) lisible optiquement par machine étant formé dans la au moins une première couche (3) sous forme de changement de couleur local (6), **caractérisé en ce que** dans la au moins une deuxième couche (5) est formée une image (7) au moins détectable optiquement de l'identificateur (1) lisible optiquement par machine, **en ce que** l'image (7) au moins détectable optiquement dans la deuxième couche (5) est une modification détectable optiquement de la deuxième couche (5), qui résulte du motif concret de l'identificateur (1) lisible par machine dans la première couche (3).

5. Film d'emballage (2) selon la revendication 4, **caractérisé en ce que** dans une zone du film d'emballage (2) entre la première couche (3) et une face intérieure du film d'emballage (2), au moins une couche, en particulier la deuxième couche (5), est opaque.

6. Film d'emballage (2) selon la revendication 4 ou 5, **caractérisé en ce que** les substances photosensibles (6) comprennent des pigments, en particulier des pigments à base de mica.

7. Film d'emballage (2) selon l'une quelconque des revendications 4 à 6, **caractérisé en ce que** la ou les premières couches (3) ne sont présentes que dans la zone dans laquelle l'identificateur (1) lisible optiquement par machine est disposé.

8. Emballage comprenant un film d'emballage (2) selon l'une quelconque des revendications 4 à 7.

9. Procédé mis en œuvre par ordinateur pour la vérification de l'identificateur (1) lisible optiquement par machine sur un film d'emballage (2) selon l'une quelconque des revendications 4 à 7, dans lequel, dans une première étape, l'identificateur (1) lisible optiquement par machine sur la première couche (3) est lu optiquement au moyen d'une caméra, dans lequel, dans une étape ultérieure, un programme de vérification installé sur un client et coopérant avec la caméra demande à l'utilisateur de lire optiquement l'image (7) au moins détectable optiquement sur la deuxième couche (5), dans lequel, après la lecture de l'identificateur (1) lisible optiquement par machine sur la deuxième couche (5), le programme de vérification compare l'identificateur (1) lisible optiquement par machine de la première couche (3) avec l'image (7) au moins détectable optiquement de la deuxième couche (5) et émet un signal concernant une correspondance.

10. Procédé mis en œuvre par ordinateur selon la revendication 9, dans lequel un UUID spécifique est attribué et validé sur un serveur à chaque identificateur lisible optiquement par machine (1), le programme de vérification établissant le contact avec le serveur pour comparer la correspondance et vérifiant s'il existe un UUID spécifique pour l'identificateur lisible optiquement par machine (1), dans lequel à chaque lecture de données d'un paquet de données, les données sont d'abord vérifiées via des API en calculant un hachage cryptographique et en le comparant à un hachage stocké d'un paquet dans une blockchain attribuée.
